# FASCICULE DE BREVET EUROPEEN

(11) **EP 2 217 361 B1**
(45) Date de publication et mention de la délivrance du brevet: **08.02.2012**
(21) Numéro de dépôt: 08871182.5
(22) Date de dépôt: 24.10.2008
(51) Int. Cl.: B01J 3/04, F23M 5/00, B01J 19/02

(54) **REACTEUR PERMETTANT LA MISE EN OEUVRE DE REACTIONS A TRES HAUTE TEMPERATURE ET HAUTE PRESSION**
HOCHTEMPERATUR- UND HOCHDRUCKREAKTOR
REACTOR FOR CARRYING OUT REACTIONS AT VERY HIGH TEMPERATURE AND HIGH PRESSURE

(30) Priorité: 30.11.2007 FR 0708373
(43) Date de publication de la demande: 18.08.2010
(73) Titulaire: IFP Energies nouvelles, 92852 Rueil-Malmaison Cedex (FR)
(72) Inventeur: BERTHOLIN, Sthéphane, 69110 Ste Foy Les Lyon (FR); GIROUDIERE, Fabrice, 69530 Orlienas (FR)
(86) Numéro de dépôt international: PCT/FR2008/001503
(87) Numéro de publication internationale: WO 2009/092876

(56) Documents cités:
- EP-A1- 0 689 868
- EP-A1- 0 842 696
- WO-A1-2004/098770
- FR-A1- 2 836 989
- US-A- 4 650 651
- US-A- 5 591 415
- ELVERS B., HAWKINS S., RUSSEY W., SCHULZ G.,: "Refractory Ceramics to Silicon Carbide" ULLMANN'S ENCYCLOPEDIA OF INDUSTRIAL CHEMISTRY, vol. A23, 1993, pages 20-29, XP002544330 Weinheim (DE)
- ANONYMOUS: "Fecralloy - Iron/Chromium (Fe72.8/Cr22/Al 5/Y 0.1/Zr 0.1 )" MATERIAL INFORMATION, [Online] XP002544331 Extrait de l'Internet: URL:http://www.goodfellow.com/A/Fecralloy- Iron-Chromium.html> [extrait le 2009-09-04]
- KEPETS M ET AL: "Mechanical characterization of the role of defects in sintered FeCrAlY foams" ACTA MECHANICA SINICA, vol. 23, no. 4, 6 juillet 2007 (2007-07-06), pages 383-398, XP019522766 SPRINGER, BERLIN, DE ISSN: 1614-3116

## Description

### Domaine de l'invention

La présente invention concerne le domaine des réacteurs permettant la mise en oeuvre de réactions à très haute température et haute pression.

Les réactions de ce type sont assez souvent des réactions de combustion ou d'oxydation partielle de composés hydrocarbonés, ou encore des réactions pouvant présenter un caractère explosif comme la chloration où la nitration de divers composés hydrocarbonées. De manière plus générale, le domaine de la présente invention est celui des réactions très exothermiques, pouvant atteindre des températures de 1600°C, et nécessitant des niveaux de pression pouvant aller jusqu'à 100 bars (1 bar = 10⁵ pascal).

Ce sont ces valeurs qui seront entendues dans la suite du texte sous l'expression "haute pression et très haute température".

### Examen de l'art antérieur

L'art antérieur dans le domaine des réacteurs pouvant fonctionner à très haute température et haute pression est assez restreint.

Nous citerons le document US 4,670,404 qui décrit un dispositif permettant de tester des matériaux soumis à de fortes pression et températures. Le dispositif comprend une zone de test du matériau, elle même entourée d'une zone de confinement. Le dispositif respecte un critère de poids entre le poids du dispositif lui même et le poids de l'échantillon du matériau soumis au test. Ce document ne donne aucune information précise sur les épaisseurs respectives des zones de test et de confinement et les niveaux de pression et de température accessibles dans la zone de test.

Le document EP 0689 868 qu'on peut considérer comme l'état de l'art le plus proche, décrit un réacteur pour la mise en oeuvre de réactions à haute température et haute pression (eau supercritique) utilisant une zone de réaction enfermée dans une enceinte de confinement pressurisée.

Le problème que la présente invention se propose de résoudre est celui d'une enceinte réactionnelle pouvant fonctionner à très haute température, c'est à dire jusqu'à 1600°C, et forte pression, jusqu'à 100 bars, en prenant en compte deux contraintes supplémentaires:
- L'hydrodynamique de la zone réactionnelle doit être maîtrisée au sens où elle doit s'approcher, soit d'un écoulement de type parfaitement agité, soit de type piston, c'est à dire sans mélange des tranches rédactionnelles adjacentes
- la zone réactionnelle doit approcher un régime aussi adiabatique que possible, de façon à ce que la température au sein de la dite zone soit la plus homogène possible. En d'autres termes, on cherche à réaliser une zone réactionnelle sans gradient de température.

Le matériau délimitant l'enceinte réactionnelle doit donc être capable de supporter des températures très largement supérieures à 1000°C.

Or, les matériaux compatibles avec des températures supérieures à 1000°C sont généralement des matériaux de type réfractaire, tels que la céramique ou le béton. Ces matériaux présentent néanmoins deux défauts qui en limitent l'utilisation:
a) D'une part, ils ne sont pas étanches et ne permettent donc pas le confinement de la réaction à l'intérieur d'un espace bien défini. En effet, leur propriété d'isolant thermique est généralement obtenue grâce à leur porosité qui les rend non étanches. Ceci est d'autant plus vrai que le volume réactionnel est petit et se rapproche du volume poreux. Ainsi, dans le cas d'une zone réactionnelle ayant la forme de petits canaux taillés dans la masse du matériau réfractaire, les réactifs peuvent diffuser en proportion importante dans la porosité, de même que les effluents réactionnels.
   De plus, sous l'effet des hautes températures, ou de cycles d'échauffement et de refroidissement répétés, le matériau réfractaire peut se fissurer, ces fissures augmentant la non étanchéité du matériau et permettant le développement de réactions parasites. Dans le cas d'une zone réactionnelle ayant la forme de petits canaux, ces fissures peuvent même devenir plus importantes en volume que les canaux eux mêmes, et perturber considérablement l'hydrodynamique de l'écoulement (les canaux sont généralement utilisés pour réaliser un écoulement de type piston).
b) D'autre part, les matériaux réfractaires sont connus pour leur faible résistance mécanique ce qui limite leur pression d'utilisation à des valeurs de l'ordre de la dizaine de bars (1 bar = 10⁵ pascal). Or l'enceinte réactionnelle recherchée doit pouvoir contenir des pressions de l'ordre de 100 bars. Il en résulte que l'enveloppe pouvant résister mécaniquement à une telle pression ne peut être qu'une enveloppe métallique. Mais cette dernière ne peut supporter des températures supérieures à 1000°C, même pour les aciers dits "réfractaires" dont la température limite d'utilisation est d'environ 1100°C sous pression atmosphérique, et diminue rapidement lorsque la pression à l'intérieur de l'enceinte augmente.

Selon l'art antérieur, la solution retenue pour la mise en oeuvre de réactions à haute pression et très hautes températures, disons 900°C et 50 bars pour fixer les idées, consiste in fine à mettre en oeuvre une épaisseur plus ou moins importante de matériau réfractaire pouvant aller jusqu'à environ 1 ou 2 mètres, de manière à protéger l'enceinte métallique en la faisant travailler à une température suffisamment basse (150°C à 300°C) pour qu'elle puisse résister à la pression de fonctionnement ( 50 bars).

Cette épaisseur importante de réfractaire, outre le poids qu'elle engendre et qui peut dans certains cas devenir rédhibitoire, pose également le problème mentionné plus haut des risques de diffusion des réactifs et des effluents réactionnels au sein même du matériau réfractaire, et du développement corrélatif de réactions parasites, auquel s'ajoute la plus ou moins grande perturbation de l'hydrodynamique de l'écoulement réactionnel.

Le problème que résout donc le réacteur selon la présente invention est celui de la mise en oeuvre de réactions chimiques très exothermiques, pouvant se développer jusqu'à des températures de 1000°C et des pressions de 100 bars, dans un équipement adapté qui confine la zone réactionnelle à un espace bien défini et permet la sortie des effluents réactionnels en respectant les normes de température concernant les enceintes sous pression.

### Description sommaire des figures

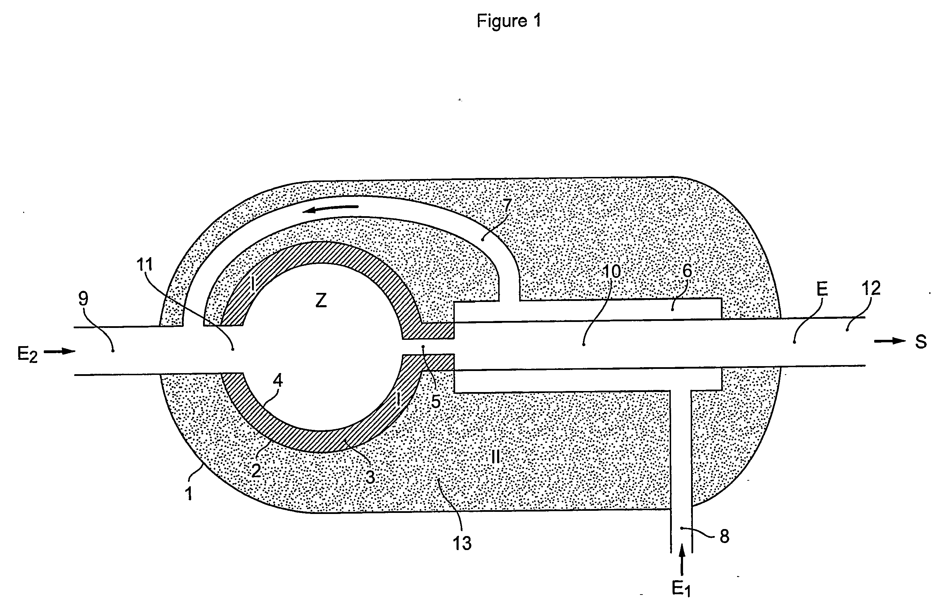

La figure 1 donne une représentation schématique du réacteur selon la présente invention dans laquelle on distingue en allant de l'intérieur vers l'extérieur, la zone réactionnelle (Z), la première enceinte interne notée (I), la seconde enceinte externe notée (II), et l'échangeur charge effluent intégré (E) contenu dans la seconde enceinte (II). Dans la suite du texte, on parlera d'enceinte interne (I) et d'enceinte externe (II).

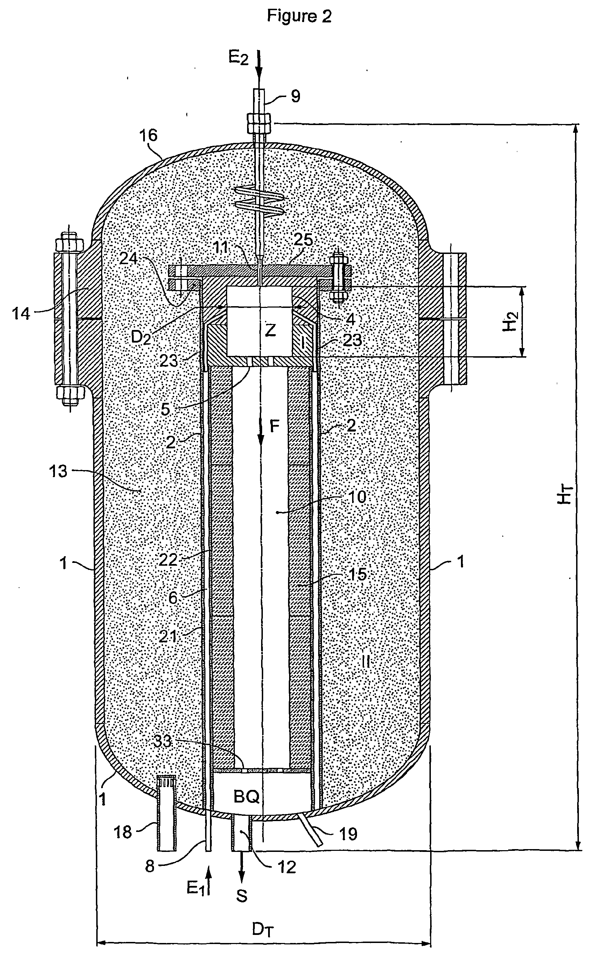

La figure 2 correspond à un mode de réalisation du réacteur selon l'invention dans lequel on reprend les numéros des éléments apparaissant dans la figure 1 auxquels on ajoute des numéros supplémentaires correspondant à certains éléments nécessaires à ladite réalisation.

### Description sommaire de l'invention

La présente invention décrit une solution au problème précédemment exposé, basée sur la mise en oeuvre de deux enceintes emboîtées selon les revendications 1 et 3 permettant un fractionnement de la contrainte de température et de pression :
- une première enceinte interne (notée (I) sur les figures 1 et 2), attenante à la zone réactionnelle (Z), est constituée d'un matériau réfractaire (3) et permet d'abaisser la température de la zone réactionnelle à un valeur d'environ 1000°C.
- une seconde enceinte externe (notée (II) sur les figures 1 et 2) contenant la première enceinte (I) et fermée par une enveloppe métallique (1) au contact avec l'extérieur, est composée d'un matériau isolant (13) qui permet d'atteindre sur ladite enveloppe métallique (1) une température maximale d'environ 350°C.

De ce fait, moyennant une épaisseur raisonnable de ladite enveloppe métallique (1), cette dernière peut tenir à une pression opératoire de l'ordre de 100 bars.

L'enceinte interne (I) a une épaisseur relativement faible, suffisante pour abaisser la température de la zone réactionnelle (Z) à une valeur-compatible-avec les matériaux métalliques résistants à haute température, disons 1000°C pour fixer les idées. Plus précisément, la température de la surface métallique interne (2) délimitant l'enceinte interne (I) est généralement inférieure à 1000°C.

La surface métallique interne (2) permet d'être certain du confinement de la zone réactionnelle, même en tenant compte d'une éventuelle diffusion des réactifs au travers de la porosité du matériau réfractaire (3) constituant l'enceinte interne (I). Le matériaux métallique constituant la surface métallique interne (2) est généralement un acier réfractaire.

A une température d'environ 1000°C, la résistance mécanique des aciers réfractaires est encore faible, et elle ne serait pas suffisante pour résister à une pression de l'ordre de 100 bars.

L'enceinte externe (II) est calculée pour résister à une pression très proche de la pression opératoire de la zone réactionnelle (Z), de manière que la différence de pression entre l'enceinte interne (I) et l'enceinte externe (II) ne soit pas supérieure à une valeur déterminée, généralement comprise entre 0,1 et 3 bars, et préférentiellement comprise entre 0,3 bars et 2 bars.

Pour maintenir la pression nécessaire à l'intérieur de l'enceinte externe (II), y compris dans les phases transitoires, un moyen de contrôle de la différence de pression entre l'enceinte interne (I) et l'enceinte externe (II) est donc utilisé, l'agent de régulation pouvant être, par exemple, un gaz inerte introduit dans l'enceinte externe (II).

L'enceinte externe (II), contient essentiellement un matériau isolant (13), de densité plus faible que celle du matériau réfractaire (3) utilisé pour l'enceinte interne (1). L'enceinte externe (II) peut avoir une épaisseur assez importante, car le risque de diffusion des réactifs n'existe plus en raison de la surface métallique interne (2) entourant la zone réactionnelle (Z) qui joue un rôle d'étanchéité.

L'épaisseur de l'enceinte externe (II) est calculée pour atteindre une température de l'enveloppe métallique externe (1) qui soit compatible avec les normes environnementales, soit de 150°C à 350°C.

De ce fait, l'enveloppe métallique externe (1) est généralement constituée d'un acier de type inoxydable.

Un autre aspect important du réacteur selon la présente invention est qu'il permet au moyen d'un échangeur charge effluent (E) entièrement intégré audit réacteur, d'abaisser la température des effluents réactionnels à une température compatible avec le matériau métallique de l'enveloppe métallique externe (1) utilisée pour fermer l'enceinte externe (II).

Cet échangeur charge effluent (E) est placé à l'intérieur de l'enceinte externe (II). Sans cet échangeur, il ne serait pas possible de traverser en toute sécurité l'enveloppe métallique externe (1) communiquant avec l'extérieur, car la tubulure de sortie (12) des effluents (S) serait à une température trop élevée par rapport à celle de ladite enveloppe métallique externe (1).

Il est éventuellement possible de compléter le refroidissement des effluents (S) au moyen d'un système de refroidissement auxiliaire placé en amont ou en aval de l'échangeur interne (E) (non représenté sur la figure 1).

### Description détaillée de l'invention

La présente invention peut se définir comme un réacteur et un procédé pour la mise en oeuvre de réactions à haute température ( jusqu'à 1600°C) et haute pression ( jusqu'à 100 bars) selon les revendications 1 et 3 comportant, en allant de l'intérieur vers l'extérieur du réacteur les éléments suivants :
- une zone réactionnelle (Z) délimitée par une paroi interne (4) et entourée d'une enceinte interne (I),
- une enceinte interne (I) délimitée par une surface métallique interne (2) et la paroi interne (4), ladite enceinte interne (I) étant constituée d'un matériau réfractaire (3), possédant une entrée d'une partie des réactifs (11), une entrée (7) pour l'autre partie des réactifs, et une tubulure de sortie des effluents (5) sensiblement en continuité avec la tubulure centrale (10) de l'échangeur intégré (E),
- une enceinte externe (II) comprise entre une enveloppe métallique externe (1) et la surface métallique interne (2) de l'enceinte interne (I), ladite enceinte externe (II) étant remplie d'un matériau isolant (13), et enfermant l'échangeur (E) permettant le refroidissement des effluents réactionnels et la préchauffe des réactifs,
- une enveloppe métallique externe (1), enfermant l'ensemble des éléments constitutifs et possédant au moins deux tubulures d'entrée des réactifs, soit la tubulure (8) communiquant avec l'échangeur intégré (E), et la tubulure (9) sensiblement en continuité avec l'entrée (11) et communiquant avec la zone réactionnelle (Z), et au moins une tubulure de sortie des effluents (12),
- un échangeur charge effluent (E) contenu à l'intérieur de l'enceinte externe (II) connecté à la tubulure d'entrée (8) d'une partie au moins des réactifs et à la tubulure de sortie (12) des effluents, et communiquant au moyen d'une tubulure interne (7) avec la zone réactionnelle (Z),
- un dispositif de régulation de la différence de pression entre l'enceinte interne (I) et l'enceinte externe (II).

L'enceinte externe (II) remplie d'un matériau isolant (13) joue le rôle d'une zone d'isolation permettant d'atteindre au niveau de l'enveloppe métallique externe (1) une température comprise entre 150 °C et 350°C.

L'enceinte interne (I) entourant la zone réactionnelle (Z) permet essentiellement de réduire la température de ladite zone réactionnelle à une valeur d'environ 1000°C mesurée au niveau de la surface métallique interne (2).

Le réacteur pour la mise en oeuvre de réactions à très haute température et haute pression selon l'invention, présente une zone réactionnelle (Z) dont le volume, appelé volume réactionnel, rapporté au volume total du réacteur est généralement compris entre 0,005 et 0,2.

La valeur du rapport entre le volume réactionnel et le volume total du réacteur se différencie en fonction de la capacité du réacteur.
a) lorsque le volume réactionnel est inférieur à 100 litres, le rapport du volume réactionnel au volume du réacteur est préférentiellement compris entre 0,005 et 0,01
b) lorsque le volume réactionnel est compris entre 100 et 1000 litres, le rapport du volume réactionnel sur le volume total du réacteur est préférentiellement compris entre 0,01 et 0,05
c) lorsque le volume réactionnel est supérieur à 1000 litres, le rapport du volume réactionnel au volume total du réacteur est préférentiellement compris entre 0,05 et 0,2.

L'épaisseur de l'enceinte interne (I) contenant le matériau réfractaire (3) rapportée au diamètre de la zone réactionnelle (Z) est comprise entre 0,1 et 0,3.

Le réacteur selon l'invention comprend un système de régulation de pression de l'enceinte externe (II) au moyen d'un gaz inerte introduit dans l'enceinte externe (II) de manière à limiter la différence de pression entre ladite enceinte (II) et l'enceinte interne (I) à une valeur généralement comprise entre 0,1 et 3 bars, et préférentiellement comprise entre 0,3 et 2 bars.

L'échangeur (E) peut se définir comme un échangeur charge effluent dans la mesure où le fluide caloporteur est constitué des effluents réactionnels issus de la zone réactionnelle (Z) et traverse ledit échangeur (E) par la tubulure centrale (10). La tubulure centrale (10) communique avec la tubulure de sortie (5) de la zone réactionnelle (Z). De manière préférée, l'axe de symétrie de l'échangeur (E) est approximativement confondu avec l'axe de symétrie de la zone réactionnelle (Z).

La tubulure centrale (10) de l'échangeur (E) communique avec l'extérieur du réacteur en traversant l'enveloppe métallique externe (1). Du fait de l'échange thermique, les effluents réactionnels circulant à l'intérieur de la tubulure (10) sont refroidis à une température comprise entre 150°C et 350°C, et se trouvent ainsi à une température compatible avec celle de l'enveloppe métallique externe (1).

Une partie des réactifs, généralement le comburant dans le cas d'une réaction de combustion, est introduite par la tubulure d'entrée (8) qui traverse l'enveloppe métallique externe (1) et communique avec la zone d'échange (6) de l'échangeur (E). Ladite zone d'échange (6), se prolonge par une tubulure (7) de forme appropriée qui rejoint préférentiellement la tubulure d'entrée (9) de l'autre partie des réactifs. La tubulure (7) est préférentiellement entièrement contenue dans l'enceinte externe (II). Dans certains cas qui restent parfaitement dans le cadre de l'invention, la tubulure (7) peut rejoindre la zone réactionnelle (Z) par une entrée distincte des entrée (9) ou (11).

L'échangeur (E) entoure généralement la tubulure de sortie (10) des effluents réactionnels sur une portion de longueur comprise entre la sortie (5) de la zone réactionnelle (Z) et la sortie (12) du réacteur lui même.

Néanmoins d'autres géométries de l'échangeur (E) sont possibles et restent dans le cadre de l'invention dans la mesure où ledit échangeur (E) reste contenu à l'intérieur de l'enceinte externe (II).

Le matériau réfractaire (3) constituant l'enceinte interne (I) peut être un béton réfractaire ou préférentiellement une céramique résistant à très haute température, c'est à dire au moins jusqu'à 1600°C. Le matériau réfractaire (3) a une porosité inférieure à 50% en volume, et une densité supérieure, à 1000 kg/m3.

La céramique peut être à base d'un des matériaux suivants: l'alumine, la mullite, la zircone, le nitrure ou le carbure de silicium. Le choix du matériau ou de la combinaison de matériau est fait de manière à réaliser un bon compromis entre une faible conductivité thermique qui permet l'abaissement de température souhaité au niveau de la surface métallique interne (2), et une porosité limitée pour réduire le risque de diffusion des réactifs à l'intérieur du matériau (3).

Le matériau isolant (13) utilisé pour remplir l'enceinte externe (II) est un matériau réfractaire résistant à des températures de l'ordre de 1000°C, et possédant une faible conductivité thermique permettant d'atteindre au niveau de l'enveloppe métallique externe (1) des températures comprises entre 150°C et 350°C.

La conductivité thermique du matériau (13) utilisé dans l'enceinte externe (II) est inférieure à 0,5 W/(m.K) (abréviation de Watt par mètre et par Kelvin), et de manière encore préférée inférieure à 0,1 W/(m.K).

Cette faible conductivité thermique permet de réaliser l'abaissement de température souhaité avec des épaisseurs de l'enceinte externe (II) qui restent relativement faibles, de l'ordre de quelques centimètres, ce qui est un point essentiel en construction, puisque ladite enceinte externe (II) a une épaisseur dimensionnée pour résister à une pression qui peut être de l'ordre de 100 bars.

Le matériau isolant (13) constituant l'enceinte externe (II) a également une densité inférieure à 500 kg/m3 de manière à limiter le poids de l'ensemble.

Le matériau isolant (13) constituant l'enceinte externe (II) est choisi parmi les matériaux suivants: alumine ou silice alumine, et peut être disposé à l'intérieur de ladite enceinte externe (II) sous forme de billes d'une taille pouvant aller de quelques millimètres à 3 cm, d'extrudés de diamètre de quelques millimètres et de longueur pouvant aller jusqu'à 3 cm.

Le matériau isolant (13) peut également être mis en oeuvre sous forme d'une laine ou de blocs usinés pour épouser la forme de l'enveloppe métallique externe (1).

Le réacteur selon la présente invention peut être utilisé dans divers procédé mettant en oeuvre des réactions fortement exothermiques. On peut citer les procédés d'oxydation partielle ou de combustion dans lesquels le comburant (E1) est introduit par la tubulure d'entrée (8), est préchauffé dans l'échangeur interne (E), est conduit à travers la tubulure (7) en sortie de l'échangeur (E), puis est mis en contact avec le combustible (E2) introduit par la tubulure d'entrée (9).

Le mélange comburant/combustible est dirigé par la tubulure d'entrée (11) dans la zone réactionnelle (Z) à l'intérieur de laquelle se déroulent les réactions d'oxydation partielle ou de combustion. Les effluents réactionnels quittent ladite zone réactionnelle (Z) par la tubulure de sortie (5), et traversent l'échangeur interne (E) par la conduite centrale (10) en agissant comme fluide caloporteur, avant d'être évacués à l'extérieur du réacteur par la tubulure de sortie (12).

Le réacteur selon la présente invention peut être utilisé dans tout procédé d'oxydation partielle ou de combustion, dans lequel la température à l'intérieur de la zone réactionnelle (Z) est comprise entre 1000°C et 1600°C, et la pression à l'intérieur de la zone réactionnelle (Z) est comprise entre 40 bars et 100 bars.

### Exemple selon l'invention (figure 2)

Le réacteur est constitué d'une enveloppe métallique externe (1) composée par assemblage de la virole (1) et de la calotte hémisphérique supérieure (16) après fermeture de la bride (14).

L'enveloppe métallique externe (1) est en acier inoxydable de type 316 L

L'enceinte externe (II) comprise entre l'enveloppe métallique externe (1) et la surface métallique interne (2) est dimensionnée pour résister à une pression de fonctionnement de 50 bar et une température maximale de 350 °C.

La surface métallique interne (2) correspond à la surface externe du tube (21). L'enceinte externe (II) a une épaisseur de 350 mm.

La surface métallique interne (2) est en acier réfractaire de type Incoloy MA956.

Les dimensions principales du réacteur sont un diamètre (DT) de 1,1 m et une hauteur (HT) de 2,5 m.

L'enceinte interne (I) est formée par le tube (21) soudé sur le fond de la virole (1), et fermée par la bride (24).

L'enceinte interne (I) définissant la zone réactionnelle (Z) est constituée d'un matériau réfractaire (3) qui est une céramique à base d'alumine (AI2 03 supérieure à 90% poids) de masse volumique 1700 kg/m³ et de porosité 22%.

La conductivité thermique de cette céramique est de 0,95 W/(m.K).

Ce béton réfractaire permet de supporter la température de 1584°C des fumées produites et crée une isolation thermique qui abaisse la température de la surface métallique interne (2), correspondant à la surface externe du tube (21), à une température de 1000°C maximum.

Les dimensions de la zone réactionnelle (Z) sont un diamètre (D2) de 250 mm et une hauteur (H2) de 300 mm.

L'épaisseur de l'enceinte interne (I) est de 50 mm.

Un second tube (22) également soudé sur le fond de la virole (1) est contenu dans le tube (21).

La zone annulaire (6) comprise entre les tubes (21) et (22) se prolonge par deux canaux (23) directement creusés dans le matériau réfractaire (3) de l'enceinte interne (I) pour alimenter la chambre réactionnelle (Z).

Ces canaux (23) jouent le rôle de la tubulure (7) représentée sur la figure schématique 1.

L'espace constituant l'enceinte externe (II) est remplie d'un matériau isolant (13) qui est une céramique à base de silice (SiO2supérieur à 80 % poids) de densité 200 kg/m3, et ayant une conductivité thermique à 1000°C de 0,04 W/(m.K) qui permet d'abaisser la température de l'enveloppe métallique externe (1) à 350°C maximum. La zone réactionnelle (Z) est alimentée d'une part par le mélange de fuel et d'eau (E2) via le tube d'entrée (9) se poursuivant par le canal (11) directement creusé dans le matériau (3), et d'autre part, par de l'oxygène (E1) qui pénètre dans la zone annulaire (6) par le tube d'introduction (8).

Les vitesses d'injection des fluides réactionnels dans la zone réactionnelle (Z) et l'orientation de ces injections ont été optimisées par calcul afin de générer la plus grande turbulence possible dans la zone réactionnelle (Z) et obtenir un mélange carburant/comburant le plus homogène possible dans tout le volume de ladite zone. Les fumées produites par la combustion à 1584°C sont évacuées par les orifices (5) creusés dans le matériau (3) de l'enceinte interne (I), et descendent dans le tube (10). Pendant la traversée du tube (10), il y a échange thermique entre les fumées descendantes (F) et l'oxygène montant par la zone annulaire (6).

Le tube (22) est protégé sur sa surface interne par un écran thermique (15) afin de le protéger de la température encore élevée des fumées de combustion (F). Cet écran est composé d'un matériau (3) de même nature que celui utilisé pour réaliser l'enceinte interne (I).

L'ensemble constitué par le tube (10), l'écran thermique (15) et la zone annulaire (6) constitue l'échangeur intégré (E).

L'échangeur (E) permet de préchauffer l'oxygène à une température maximale de 1000°C avant son entrée dans la zone réactionnelle (Z).

Les fumées sortent en partie basse de l'échangeur (E) par les orifices (33) et pénètrent dans un volume de refroidissement (BQ) dans lequel on peut injecter de l'eau par le tube (19) afin d'abaisser la température des fumées à une température de 350°C. Les fumées refroidies (S) sortent ensuite du réacteur par le tube (12).

L'enceinte externe (II) est maintenue sous une pression d'azote à une valeur de 50 bars à plus ou moins 1 bar, par un flux d'azote entrant le tube (18).

Le réacteur selon l'invention traite un débit de 24,3 kg/h de fuel et de 217,5 kg/h ( noté E2 sur la figure 2).

Le débit d'oxygène pur (noté E1) est de 100,2 kg/h.

La pression dans la zone réactionnelle est de 50 bars (soit 5MPa).

La température des fumées générées par la combustion (F) est de 1584°C.

La composition des fumées générées est (en % poids):
O2: 4,39 %
H2O: 73,8 %
CO2: 21,9 %
CO+ H2: traces (inférieur à 0,1 %)

## Revendications

1. Réacteur pour la mise en oeuvre de réactions de combustion ou d'oxydation partielle à haute température, jusqu'à 1600°C, et haute pression jusqu'à 100 bars, comportant;
- une zone réactionnelle (Z) délimitée par une paroi interne (4) et entourée d'une enceinte interne (I),
- une enceinte interne (I) délimitée par une surface métallique interne (2) en acier réfractaire de type fer/chrome/aluminium ou nickel/chrome, et la paroi interne (4), ladite enceinte interne (I) étant constituée d'un matériau réfractaire (3), possédant une entrée d'une partie des réactifs (11), une entrée (7) pour l'autre partie des réactifs, et une tubulure de sortie des effluents (5) sensiblement en continuité avec la tubulure centrale (10) de l'échangeur intégré (E), le dit matériau réfractaire (3) ayant une porosité inférieure à 50 % en volume, et une densité supérieure à 1000 kg/m³,
- une enceinte externe (II) comprise entre une enveloppe métallique externe (1) et la surface métallique interne (2) de l'enceinte interne (I), ladite enceinte externe (II) étant remplie d'un matériau isolant (13), et enfermant l'échangeur (E) permettant le refroidissement des effluents réactionnels et la préchauffe des réactifs, le dit matériau isolant (13) ayant une conductivité thermique inférieure à 0,5 W/(m.K), préférentiellement inférieure à 0,1 W/(m.K), et une densité inférieure à 500 kg/m³.
- une enveloppe métallique externe (1), en acier inoxydable enfermant l'ensemble des éléments constitutifs et possédant au moins deux tubulures d'entrée des réactifs, soit la tubulure (8) communiquant avec l'échangeur intégré (E), et la tubulure (9) sensiblement en continuité avec l'entrée (11) et communiquant avec la zone réactionnelle (Z), et au moins une tubulure de sortie des effluents (12),
- un échangeur charge effluent (E) contenu à l'intérieur de l'enceinte externe (II) connecté à la tubulure d'entrée (8) d'une partie au moins des réactifs et à la tubulure de sortie (12) des effluents, et communiquant au moyen d'une tubulure interne (7) avec la zone réactionnelle (Z),
- un dispositif de régulation de la différence de pression entre l'enceinte interne (I) et l'enceinte externe (II), permettant de maintenir la différence de pression entre l'enceinte interne (I) et l'enceinte externe (II) à une valeur comprise entre 0,1 et 3 bars, et préférentiellement comprise entre 0,3 et 2 bars, ledit réacteur étant tel que l'épaisseur de l'enceinte interne (I) contenant le matériau réfractaire (3) rapportée au diamètre de la zone réactionnelle (Z) est comprise entre 0,1 et 0,3.

2. Réacteur pour la mise en oeuvre de réactions à très haute température et haute pression selon la revendications 1, dans lequel:
a) lorsque le volume réactionnel est inférieur à 100 litres, le rapport du volume réactionnel au volume du réacteur est compris entre 0,005 et 0,01
b) lorsque le volume réactionnel est compris entre 100 et 1000 litres, le rapport du volume réactionnel sur le volume total du réacteur est compris entre 0,01 et 0,05
c) lorsque le volume réactionnel est supérieur à 1000 litres, le rapport du volume réactionnel au volume total du réacteur est compris entre 0,05 et 0,2.

3. Procédé d'oxydation partielle ou de combustion utilisant le réacteur selon la revendication 1,
- dans lequel le comburant (E1) est introduit par la tubulure d'entrée (8), est préchauffé dans l'échangeur interne (E), est introduit dans la tubulure (7) et est mis en contact avec le combustible (E2) qui est introduit par la tubulure d'entrée (9), le mélange comburant / combustible est dirigé par l'entrée (11) dans la zone réactionnelle (Z) dans laquelle se déroulent les réactions d'oxydation partielle ou de combustion, les effluents réactionnels quittant ladite zone réactionnelle (Z) par la tubulure de sortie (5), et traversant l'échangeur interne (E) par la conduite centrale (10), où ils cèdent leur chaleur au comburant (E1), avant d'être évacués à l'extérieur du réacteur par la tubulure de sortie (12), et
- dans lequel la température à l'intérieur de la zone réactionnelle (Z) est comprise entre 1000 et 1600°C, et la pression à l'intérieur de la zone réactionnelle (Z) est comprise entre 50 et 100 bars, et
- dans lequel la différence de pression entre l'enceinte interne (I) et l'enceinte externe (II) est maintenue à une valeur comprise entre 0,3 et 2 bars.

## Claims

1. A reactor for carrying out reactions at high temperature, up to 1600°C, and high pressure, up to 100 bar, comprising:
• a reaction zone (Z) defined by an inner wall (4) and surrounded by an inner vessel (I);
• an inner vessel (I) defined by an inner metal surface (2) and the inner wall (4), said inner vessel (I) being constituted by a refractory material (3), having an inlet for a portion of the reagents (11), an inlet (7) for the other portion of the reagents, and an outlet pipe (5) for effluents which is substantially contiguous with the central pipe (10) of the integrated exchanger (E), the porosity of said refractory material (3) being less than 50% by volume with a density of more than 1000 kg/m³;
• an outer vessel (II) comprised between an outer metal envelope (1) and the inner metal surface (2) of the inner vessel (I), said outer vessel (II) being filled with an insulating material (13), and enclosing the exchanger (E) allowing the reaction effluents to be cooled and the reagents to be pre-heated, said insulating material (13) having a thermal conductivity of less than 0.5 W/(m.K), preferably less than 0.1 W/(m.K), and a density of less than 500 kg/m³;
• an outer metal envelope (1), enclosing all of the constituent elements and having at least two reagent inlet pipes, namely the pipe (8) communicating with the integrated exchanger (E) and the pipe (9) which is substantially contiguous with the inlet (11) and communicates with the reaction zone (Z), and at least one effluent outlet pipe (12);
• a feed-effluent exchanger (E) contained inside the outer vessel (II) connected to the inlet pipe (8) for at least a portion of the reagents and to the effluent outlet pipe (12), and communicating with the reaction zone (Z) by means of an inner pipe (7);
• a device for regulating the pressure difference between the inner vessel (1) and the outer vessel (II) at a value in the range 0.1 to 3 bars, preferably in the range 0.3 to 2 bars, said reactor in which the thickness of the inner vessel (I) containing the refractory material (3) with respect to the diameter of the reaction zone (Z) is in the range 0.1 to 0.3.

2. A reactor for carrying out reactions at very high temperature and high pressure according to claim 1, in which:
a) when the reaction volume is less than 100 litres, the ratio of the reaction volume to the volume of the reactor is in the range 0.005 to 0.01;
b) when the reaction volume is in the range 100 to 1000 litres, the ratio of the reaction volume to the total volume of the reactor is in the range 0.01 to 0.05;
c) when the reaction volume is more than 1000 litres, the ratio of the reaction volume to the total volume of the reactor is in the range 0.05 to 0.2.

3. A partial oxidation or combustion process using the reactor according to claim 1,
• in which the oxidant (E1) is introduced via the inlet pipe (8), is pre-heated in the internal exchanger (E), is introduced into the pipe (7) and is brought into contact with the fuel (E2) which is introduced via the inlet pipe (9), the oxidant/fuel mixture is directed via the inlet (11) into the reaction zone (Z) in which the partial oxidation or combustion reactions occur, the reaction effluents leaving said reaction zone (Z) via the outlet pipe (5) and traversing the internal exchanger (E) via the central conduit (10), where they surrender their heat to the oxidant (E1), before being evacuated out of the reactor via the outlet pipe (12); and
• in which the temperature inside the reaction zone (Z) is in the range 1000°C to 1600°C and the pressure inside the reaction zone (Z) is in the range 50 to 100 bars; and
• in which the difference in pressure between the inner vessel (I) and the outer vessel (II) is maintained at a value in the range 0.3 to 2 bars.

## Patentansprüche

1. Reaktor zur Durchführung von Verbrennungs- oder partiellen Oxidationsreaktionen bei einer hohen Temperatur bis zu 1600 °C und einem hohen Druck bis zu 100 Bar, umfassend:
- eine Reaktionszone (Z), die durch eine Innenwand (4) begrenzt wird und von einem inneren Raum (I) umgeben ist,
- einen inneren Raum (I), der durch eine metallische Innenfläche (2) aus hitzebeständigem Stahl vom Typ Eisen/Chrom/ Aluminium oder Nickel/Aluminium und die Innenwand (4) begrenzt wird, wobei dieser innere Raum (I) aus einem hitzebeständigen Material (3) besteht, einen Eingang für einen Teil der Reagenzien (11), einen Eingang (7) für den anderen Teil der Reagenzien und eine Ausgangsrohrleitung für Abströme (5) aufweist, die im Wesentlichen in Kontinuität mit der zentralen Rohrleitung (10) des integrierten Wärmeaustauschers (E) ist, wobei dieses hitzebeständige Material (3) eine Porosität kleiner als 50 Volumen-% und eine Dichte größer als 1000 kg/m³ hat,
- einen äußeren Raum (II), der zwischen einem metallischen Außenmantel (1) und der metallischen Innenfläche (2) des inneren Raums (I) liegt, wobei dieser äußere Raum (II) mit einem isolierenden Material (13) gefüllt ist und den Wärmeaustauscher (E) einschließt, der die Abkühlung der Reaktionsabströme und die Vorwärmung der Reagenzien erlaubt, wobei dieses isolierende Material (13) eine Wärmeleitfähigkeit kleiner als 0,5 W/(m.K), bevorzugt kleiner als 0,1 W/(m.K), und eine Dichte kleiner als 500 kg/m³ hat,
- einen metallischen Außenmantel (1) aus rostfreiem Stahl, der die Gesamtheit der Bestandteile umschließt und mindestens zwei Eingangsrohrleitungen für Reagenzien umfasst, das heißt, die Rohrleitung (8), die mit dem integrierten Wärmeaustauscher (E) verbunden ist, und die Rohrleitung (9), die im Wesentlichen mit dem Eingang (11) in Kontinuität ist und mit der Reaktionszone (Z) verbunden ist, und mindestens eine Ausgangsrohrleitung für die Abströme (12),
- einen Charge/Abstrom-Wärmeaustauscher (E), der im Inneren des äußeren Raums (II) enthalten ist, mit der Eingangsrohrleitung (8) mindestens eines Teils der Reagenzien und mit der Ausgangsrohrleitung (12) der Abströme verbunden ist und durch eine interne Rohrleitung (7) mit der Reaktionszone (Z) in Verbindung steht,
- eine Vorrichtung zur Regelung der Druckdifferenz zwischen dem inneren Raum (I) und dem äußeren Raum (II), die es erlaubt, die Druckdifferenz zwischen dem inneren Raum (I) und dem äußeren Raum (11) auf einen Wert zwischen 0,1 und 3 Bar zu halten, und bevorzugt zwischen 0,3 und 2 Bar, wobei dieser Reaktor derart ist, dass die Dicke des inneren Raums (I), die das hitzebeständige Material (3) enthält, im Verhältnis zum Durchmesser der Reaktionszone (Z) zwischen 0,1 und 0,3 liegt.

2. Reaktor zur Durchführung von Reaktionen bei sehr hoher Temperatur und hohem Druck nach Anspruch 1, wobei:
a) das Verhältnis des Reaktionsvolumens zum Reaktorvolumen zwischen 0,005 und 0,01 liegt, wenn das Reaktionsvolumen kleiner als 100 Liter ist
b) das Verhältnis des Reaktionsvolumens zum Reaktorvolumen zwischen 0,01 und 0,05 liegt, wenn das Reaktionsvolumen zwischen 100 und 1000 Liter liegt
c) das Verhältnis des Reaktionsvolumens zum Reaktorvolumen zwischen 0,05 und 0,2 liegt, wenn das Reaktionsvolumen größer als 1000 Liter ist.

3. Verfahren zur partiellen Oxidation oder zur Verbrennung mithilfe des Reaktors von Anspruch 1,
- wobei der Sauerstoffträger (E1) durch die Eingangsrohrleitung (8) eingeleitet wird, im internen Wärmeaustauscher (E) vorgewärmt wird, in die Rohrleitung (7) eingeleitet wird und mit dem Brennstoff (E2), der durch die Eingangsrohrleitung (9) eingeleitet wird, in Kontakt gebracht wird, das Brennstoff-Sauerstoffträger-Gemisch durch den Eingang (11) in die Reaktionszone (Z) geleitet wird, in welcher die partiellen Oxidationsreaktionen oder die Verbrennung ablaufen, wobei die Reaktionsabströme diese Reaktionszone (Z) durch die Ausgangsrohrleitung (5) verlassen und den internen Wärmeaustauscher (E) durch die zentrale Leitung (10) durchlaufen, wo sie ihre Wärme an den Sauerstoffträger (E1) abgeben, bevor sie durch die Ausgangsrohrleitung (12) aus dem Reaktor ausgeleitet werden, und
- wobei die Temperatur im Inneren der Reaktionszone (Z) zwischen 1000 und 1600 °C liegt und der Druck im Inneren der Reaktionszone (Z) zwischen 50 und 100 Bar liegt, und
- wobei die Druckdifferenz zwischen dem inneren Raum (I) und dem äußeren Raum (II) auf einen Wert zwischen 0,3 und 2 Bar gehalten wird.
